# FASCICULE DE BREVET EUROPEEN

(11) **EP 1 665 436 B1**
(45) Date de publication et mention de la délivrance du brevet: **02.11.2016**
(21) Numéro de dépôt: 04816127.7
(22) Date de dépôt: 09.09.2004
(51) Int. Cl.: H01M 8/04

(54) **DISPOSITIF DE TRANSFERT D'EAU ET DE CHALEUR ENTRE DEUX FLUX D'AIR ET APPLICATION A L'HUMIDIFICATION DE GAZ D'ENTREE DE PILE A COMBUSTIBLE**
VORRICHTUNG ZUR WASSER/WÄRME/ÜBERTRAGUNG ZWISCHEN ZWEI LUTFSTRÖMEN UND ANWENDUNG ZUM BEFEUCHTEN VON BRENNSTOFFZELLEN-EINLASSSGAS
DEVICE FOR THE TRANSFER OF WATER AND HEAT BETWEEN TWO AIR FLOWS AND USE THEREOF FOR THE HUMIDIFICATION OF FUEL CELL INLET GAS

(30) Priorité: 16.09.2003 FR 0350542
(43) Date de publication de la demande: 07.06.2006
(73) Titulaire: L'AIR LIQUIDE, Société Anonyme pour l'Etude et l'Exploitation des Procédés Georges Claude, 75007 Paris (FR)
(72) Inventeur: ROBERGE, Guillaume, F-38300 Bourgoin (FR); CHARLAT, Pierre, F-38250 Lans-en-Vercors (FR); NOVET, Thierry, F-38190 Bernin (FR)
(74) Mandataire: De Cuenca, Emmanuel Jaime
(86) Numéro de dépôt international: PCT/FR2004/050419
(87) Numéro de publication internationale: WO 2005/027251

(56) Documents cités:
- EP-A- 1 298 749
- FR-A- 2 828 011
- PATENT ABSTRACTS OF JAPAN vol. 1995, no. 08, 29 septembre 1995 (1995-09-29) & JP 07 135012 A (TOYOTA MOTOR CORP.), 23 mai 1995 (1995-05-23)

## Description

La présente invention concerne les dispositifs de transfert d'eau et de chaleur entre un premier et un second flux d'air et l'utilisation d'un tel dispositif pour l'humidification de l'air d'alimentation d'une pile à combustible.

Une installation d'alimentation en air de pile à combustible comprenant un dispositif de transfert d'eau et de chaleur entre les circuits d'entrée et de sortie d'air cathode est décrit dans le document FR-A-2 828 011, au nom de la Demanderesse.

Le document FR 2828011-A décrit un échangeur thermique pour les circuits d'alimentation et d'évacuation d'une pile à combustible dans lequel deux membranes hydrophiles sont séparées par un espace intercalaire permettant l'accumulation d'eau.

La présente invention a pour objet de proposer un dispositif amélioré de ce type, de structure compacte et de coûts d'assemblage réduits et présentant une efficacité accrue avec de faibles pertes de charge.

Pour ce faire, selon une caractéristique de l'invention, le dispositif de transfert d'eau et de chaleur comprend un empilage d'au moins deux sous-ensembles de transfert de configuration lamellaire comportant chacun une structure de transfert à matériaux poreux hydrophiles disposée entre une première structure de distribution du premier flux d'air et une deuxième structure de distribution du deuxième flux d'air, la structure de transfert comprenant au moins une couche micro-poreuse hydrophile en contact avec une couche macro-poreuse hydrophile.

Selon des caractéristiques plus particulières de l'invention : Avantageusement la couche macroporeuse est constituée sous la forme d'une couche de supportage à fibres longues, typiquement tissées.

Les couches poreuses d'un sous ensemble sont en contact local avec les couches poreuses d'un sous ensemble adjacent.

L'empilage est monté pressé entre des cordes de distribution de fluide munies d'organes de raccordement à des circuiteries, notamment de circuit d'air et d'eau pour l'humidification de l'air d'alimentation d'une pile à combustible.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique partielle en perspective et en éclaté d'un mode de réalisation d'un dispositif selon l'invention ; et
- les figures 2 et 3 sont des vues en plan des structures de distribution des premier et second flux d'air du dispositif de la figure 1.

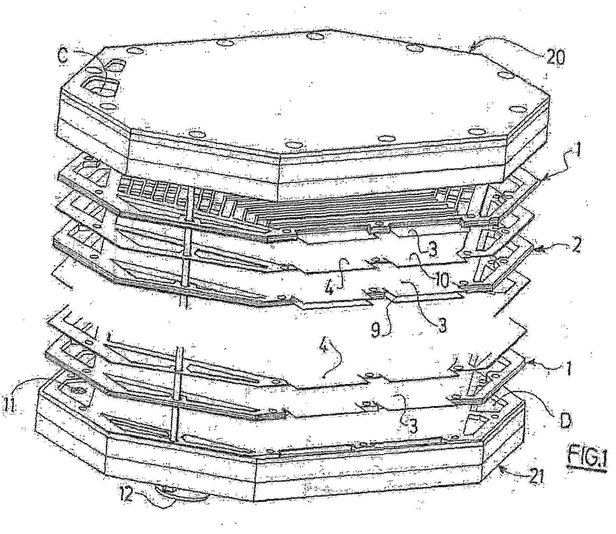

Comme on le voit sur la figure 1, le dispositif selon l'invention comprend essentiellement un empilage de sous-ensembles de transfert de configurations lamellaires comportant chacun une structure de transfert poreuse intercalée entre une première structure de distribution du premier flux d'air (ou cellule d'évaporation) 1 et une deuxième structure de distribution du deuxième flux d'air (ou cellule de condensation) 2.

Plus précisément, la structure de transfert à matériau poreux hydrophile comprend au moins une couche micro-poreuse hydrophile 3 en contact avec une couche macro-poreuse hydrophile 4.

Dans l'exemple représenté sur la figure 1, chaque couche macro-poreuse 4, réalisée typiquement en fibres longues de verre ou de cellulose tissées, avantageusement un tissu serré de fibres de verre, est interposé entre deux couches micro-poreuses ou membranes 3, réalisées typiquement dans un matériau plastique hydrophile fritté, avantageusement en polyéther sulfone (PES), délimitant en haut et en bas les structures de transfert.

Outre son rôle de transport intrinsèque d'eau, la couche macro-poreuse assure un rôle de supportage mécanique pour assurer une séparation entre les deux couches micro-poreuses et garantir ainsi la présence d'un film capillaire entre ces deux parois capillaires, mais aussi pour supporter mécaniquement ces couches micro-poreuses afin de résister convenablement à la différence de pression entre les compartiments.

A cette fin, on choisira de préférence un tissu dont les fibres très longues restent tendues sous la pression et limitent la déformation irréversible des couches micro-poreuses tout en garantissant un transport transversal de l'eau liquide au sein de la structure tri couches, en transportant l'eau produite en excès dans certaines parties vers les zones où le bilan est déficitaire.

Chaque couche de l'empilement a typiquement une épaisseur comprise entre 1 et 5 mm, la dimension des pores des couches macro poreuses étant comprise entre 50 et 250 microns et celle des couches micro-poreuses n'excédant pas 5 microns.

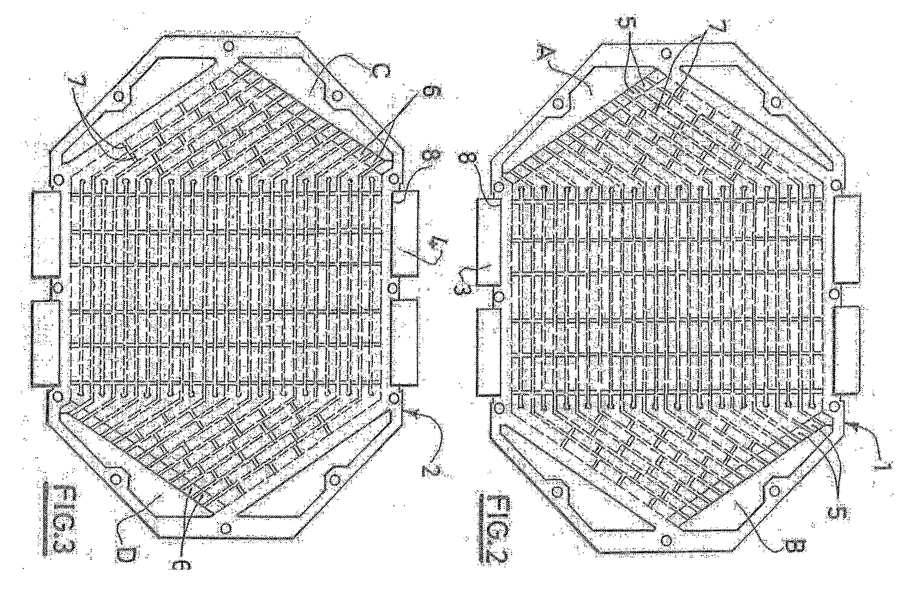

Comme on le voit sur les figures 2 et 3, les structures de transfert de fluide sont constituées par au moins une, typiquement deux couches de polycarbonate formant l'image l'une de l'autre par symétrie centrale et pouvant ainsi être obtenues à partir d'un même moule. Chaque couche est constituée d'un cadre qui délimite la zone d'échange dans lequel sont ménagés quatre trous collecteurs A-D pour le passage des gaz d'alimentation.

Pour un échange optimisé à contre-courant entre les flux d'air, de deux trous collecteurs opposés (A vers B dans la figure 2 et C vers D dans la figure 3) partent des canaux de guidage d'air 5 et 6, entrecoupés suivant un motif déterminé par des cloisons de renvoi de flux 7 décalées d'un passage à l'autre et permettant de réaliser des restrictions à l'écoulement garantissant une turbulence du flux d'air. Les restrictions sont disposées de telle façon que chaque passage ait le même nombre de restriction, ce qui permet d'obtenir une bonne maîtrise de la distribution de l'air entre les différents passages.

Le cadre périphérique comporte des découpes en retrait 8 pour permettre d'exposer des zones latérales débordantes 9 et 10 des couches poreuses 3 et 4, qui permettent, en configuration assemblée des couches et des sous-ensembles, de maintenir en relation capillaire les différentes couches poreuses antériorisant la répartition de l'eau liquide entre ces éléments et l'évacuation vers l'extérieur de l'eau produite en excès dans le dispositif de transfert. Cette évacuation vers l'extérieur de l'eau produite en excès permet d'éviter l'engorgement des couches poreuses mais également, grâce à la répartition ainsi obtenue dans toutes les couches de l'eau liquide produite en excès dans la pile, d'éviter l'assèchement des zones déficitaires en eau liquide. On obtient de plus une fonction de séparation de phases dans la partie condensation, où l'eau liquide est « aspirée » par les mèches de contact 9 et 10 et s'écoule par gravité vers le bas du dispositif pour évacuation par la sortie 12.

L'empilement des structures de transfert et de distribution, encollées périphériquement, est pressé entre des corps de distribution d'extrémité 20 et 21, typiquement également en polycarbonate ou PMMA, ayant des lumières de raccordement à des circuiteries de fluides de pile à combustible. Dans le mode de réalisation représenté, le collecteur C est le collecteur de la veine de condensation pour le gaz humide qui est introduit à la base par une entrée 10 et appauvri en oxygène, c'est-à-dire pour la sortie de l'air appauvri de la pile à combustible. Ce collecteur à également une fonction de séparateur de phases, l'eau liquide en excès de la veine de condensation tombant vers le bas dans le corps d'extrémité inférieur pour être évacué par un trou d'évacuation 11. Le collecteur D est celui de l'entrée de la veine de condensation, c'est-à-dire la sortie d'air très humide de la pile. Corrélativement, comme on le voit sur la figure 2, le collecteur A est celui de l'entrée dans la veine d'évaporation, c'est-à-dire du flux de gaz sec en sortie du compresseur d'air alimentant la pile, le collecteur B étant celui de la sortie de la veine d'évaporation, c'est-à-dire de l'air humidifié dans le dispositif selon l'invention et fourni à la pile pour l'alimentation en oxygène de cette dernière.

Après assemblage, le dispositif est enveloppé périphériquement de façon étanche dans un film étanche, par exemple en cellophane ou en polyuréthane, pour éviter le dessèchement des couches poreuses lors des périodes de non utilisation de la pile à combustible.

Bien que l'invention ait été décrite en relation avec des modes de réalisation particuliers, elle ne s'en trouve pas limitée, mais est susceptible de modification ou de variantes qui apparaîtront à l'homme du métier dans le cadre des revendications ci-après.

En particulier, dans le cas où les propriétés capillaires de la couche macro-poreuse et le film d'eau résiduel entre cette dernière et la couche micro-poreuse adjacente permettent un transport suffisant de l'eau liquide, ou dans le cas où la pression dans les structures de condensation 2 est très proche de la pression atmosphérique, on n'a pas besoin d'assurer une étanchéité entre la couche macro-poreuse et cette structure de transfert, en supprimant ainsi une des couche micro-poreuse 3 à points de bulles élevés côté structure de condensation. Dans ce cas, il faut que la couche macro-poreuse 4 ait un point de bulle supérieur à la différence de pression entre la structure de condensation et la pression atmosphérique.

## Revendications

1. Dispositif de transfert d'eau et de chaleur entre un premier et un second flux d'air, comprenant un empilage d'au moins deux sous ensemble de transfert de configuration lamellaire comportant chacun une structure de transfert à matériaux poreux hydrophiles (3,4) disposée entre une première structure de distribution du premier flux d'air (1) et une deuxième structure de distribution du deuxième flux d'air (2),
**caractérisé en ce que** la structure de transfert comprend au moins une couche micro-poreuse (3) hydrophile en contact avec une couche macro-poreuse (4) hydrophile.

2. Dispositif selon la revendication 1, **caractérisé en ce que** la couche macro-poreuse (4) est une couche de supportage en un matériau à fibres longues.

3. Dispositif selon la revendication 2, **caractérisé en ce que** la couche macro-poreuse (4) est réalisée dans un matériau formé de fibres de cellulose ou de verre.

4. Dispositif selon la revendication 2 ou la revendication 3, **caractérisé en ce que** la couche macro-poreuse (4) est constituée de fibres tissées.

5. Dispositif selon l'une des revendications 2 à 4, **caractérisé en ce que** la couche macro-poreuse (4) a des dimension de pores entre 50 et 250 µ.

6. Dispositif selon l'une des revendication 1 à 5, **caractérisé en ce que** la couche micro-poreuse (3) a une dimension de pores n'excédant pas 5 microns.

7. Dispositif selon la revendication 6, **caractérisé en ce que** la couche micro-poreuse (3) est réalisée en polyéthersulfone (PES).

8. Dispositif selon l'une des revendications 1 à 7, **caractérisé en ce que** les couches poreuses (3,4) ont chacune une épaisseur n'excédant pas 5 mm.

9. Dispositif selon l'une des revendications 1 à 8, **caractérisé en ce que** les couches poreuses d'un sous-ensemble sont en contact local (9, 10) avec les couches poreuses d'un sous-ensemble adjacent.

10. Dispositif selon l'une des revendications précédentes, **caractérisé en ce que** chaque structure de transfert (1,2) comprend au moins une plaque moulée en polycarbonate.

11. Dispositif selon l'une des revendications précédentes, **caractérisé en ce que** l'empilage est enveloppé périphériquement dans un film étanche.

12. Dispositif selon l'une des revendications précédentes, **caractérisé en ce que** l'empilage est monté pressé entre des corps de distribution de fluide (20,21) munis d'organes de raccordement à des circuiteries.

13. Utilisation d'un dispositif selon l'une des revendications précédentes, pour l'humidification de l'air d'alimentation d'une pile à combustible.

## Patentansprüche

1. Vorrichtung zur Übertragung von Wasser und Wärme zwischen einem ersten und einem zweiten Luftstrom, welche eine Stapelung von mindestens zwei Übertragungs-Untereinheiten von lamellarer Konfiguration umfasst, von denen jede eine Übertragungsstruktur aus hydrophilen porösen Materialien (3, 4) enthält, die zwischen einer ersten Verteilungsstruktur des ersten Luftstroms (1) und einer zweiten Verteilungsstruktur des zweiten Luftstroms (2) angeordnet ist, **dadurch gekennzeichnet, dass** die Übertragungsstruktur mindestens eine hydrophile mikroporöse Schicht (3) in Kontakt mit einer hydrophilen makroporösen Schicht (4) umfasst.

2. Vorrichtung nach Anspruch 1, **dadurch gekennzeichnet, dass** die makroporöse Schicht (4) eine Tragschicht aus einem langfaserigem Material ist.

3. Vorrichtung nach Anspruch 2, **dadurch gekennzeichnet, dass** die makroporöse Schicht (4) in einem Material ausgeführt ist, das von Zellulose- oder Glasfasern gebildet wird.

4. Vorrichtung nach Anspruch 2 oder Anspruch 3, **dadurch gekennzeichnet, dass** die makroporöse Schicht (4) aus gewebten Fasern besteht.

5. Vorrichtung nach einem der Ansprüche 2 bis 4, **dadurch gekennzeichnet, dass** die makroporöse Schicht (4) Porengrößen zwischen 50 und 250 µ besitzt.

6. Vorrichtung nach einem der Ansprüche 1 bis 5, **dadurch gekennzeichnet, dass** die mikroporöse Schicht (3) eine Porengröße von nicht über 5 Mikron besitzt.

7. Vorrichtung nach Anspruch 6, **dadurch gekennzeichnet, dass** die mikroporöse Schicht (3) aus Polyethersulfon (PES) ausgeführt ist.

8. Vorrichtung nach einem der Ansprüche 1 bis 7, **dadurch gekennzeichnet, dass** die porösen Schichten (3, 4) jeweils eine Dicke von nicht über 5 mm besitzen.

9. Vorrichtung nach einem der Ansprüche 1 bis 8, **dadurch gekennzeichnet, dass** sich die porösen Schichten einer Untereinheit in lokalem Kontakt (9, 10) mit den porösen Schichten einer benachbarten Untereinheit befinden.

10. Vorrichtung nach einem der vorstehenden Ansprüche, **dadurch gekennzeichnet, dass** jede Übertragungsstruktur (1, 2) mindestens eine Formplatte aus Polycarbonat umfasst.

11. Vorrichtung nach einem der vorstehenden Ansprüche, **dadurch gekennzeichnet, dass** die Stapelung an ihrem Umfang in eine dichte Folie gewickelt ist.

12. Vorrichtung nach einem der vorstehenden Ansprüche, **dadurch gekennzeichnet, dass** die Stapelung zwischen Fluid-Verteilungskörpern (20, 21) gepresst montiert ist, welche mit Organen zum Anschluss an Kreisläufe ausgestattet sind.

13. Verwendung einer Vorrichtung nach einem der vorstehenden Ansprüche für die Befeuchtung der Zuluft einer Brennstoffzelle.

## Claims

1. Device for the transfer of water and heat between first and second air flows, comprising a stack of at least two transfer sub-assemblies with a lamellar configuration each comprising a transfer structure with hydrophilic porous materials (3, 4) located between a first distribution structure of the first air flow (1) and a second distribution structure of the second air flow (2),
**characterised in that** the transfer structure comprises at least one hydrophilic micro-porous layer (3) in contact with a hydrophilic macro-porous layer (4).

2. Device according to claim 1, **characterised in that** the macro-porous layer (4) is a support layer made from a material with long fibres.

3. Device according to claim 2, **characterised in that** the macro-porous layer (4) is made from a material formed from cellulose or glass fibres.

4. Device according to claim 2 or claim 3, **characterised in that** the macro-porous layer (4) is composed of woven fibres.

5. Device according to one of claims 2 to 4, **characterised in that** the size of the pores in the macro-porous layer (4) is between 50 and 250 µ.

6. Device according to one of claims 1 to 5, **characterised in that** the size of the pores in the micro-porous layer (3) is not larger than 5 microns.

7. Device according to claim 6, **characterised in that** the micro-porous layer (3) is made of polyethersulphone (PES).

8. Device according to one of claims 1 to 7, **characterised in that** the thickness of each of the porous layers (3, 4) does not exceed 5 mm.

9. Device according to one of claims 1 to 8, **characterised in that** the porous layers of a sub-assembly are in local contact (9,10) with the porous layers of an adjacent sub-assembly.

10. Device according to one of the previous claims, **characterised in that** each transfer structure (1, 2) comprises at least one moulded polycarbonate board.

11. Device according to one of the previous claims, **characterised in that** the periphery of the stack is surrounded by a sealed film.

12. Device according to one of the previous claims, **characterised in that** the stack is installed squeezed between the fluid distribution casing (20, 21) provided with connections devices to circuits.

13. Use of a device according to one of the previous claims, for humidification of a fuel cell supply air.
